# EUROPEAN PATENT APPLICATION

(11) **EP 2 662 946 A1**
(43) Date of publication of application: **13.11.2013**
(21) Application number: 12167408.9
(22) Date of filing: 10.05.2012
(51) Int. Cl.: H02J 7/00, H01M 10/39

(54) **Electrochemical cell with a liquid electrode and method for charging the same**

(71) Applicant: ABB Technology AG, 8050 Zürich (CH)
(72) Inventor: Chartouni, Daniel, 5430 Wettingen (CH); Gremaud, Robin, 4600 Olten (CH); Rondeau, Louis, 8004 Zürich (CH)
(74) Representative: ABB Patent Attorneys

(57) **Abstract**

An electrochemical cell (10) is proposed, having at least one liquid electrode (20) with a variable liquid level (h). The cell includes a bypass system (30) for a charging current, which is adapted for bypassing a percentage of a charging current around the cell, wherein the percentage of the bypassed current is dependent on the liquid level. A respective charging method is also disclosed.

## Description

### TECHNICAL FIELD

The present disclosure generally relates to electrochemical cells with at least one liquid electrode, and batteries including these electrochemical cells. In particular, it relates to a charging system and method for such a cell or battery, even more particularly to a system and method avoiding an overcharging of such a cell or battery.

### BACKGROUND OF THE INVENTION

Batteries of electrochemical cells containing a liquid electrode can be used as energy storage systems, for example to support intermittent, renewable power sources. Examples of such systems are high temperature sodium/sulfur or sodium/nickelchloride (ZEBRA) cells respectively batteries.

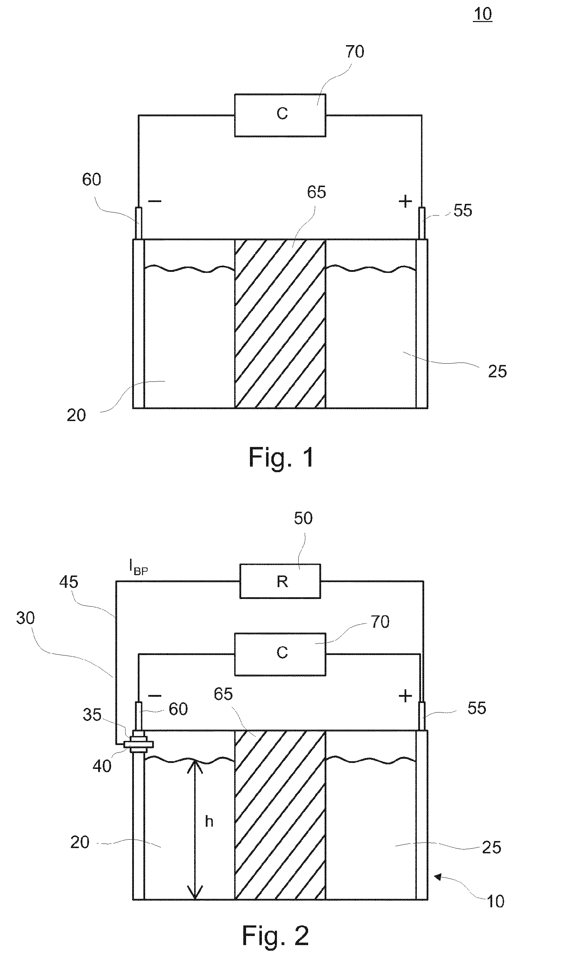

The working principle of a sodium high temperature cell according to the state of the art is schematically shown in Figure 1. For a cell based on sodium-sulfur, the negative electrode 20 consists in liquid sodium (Na) and the positive electrode 25 is a coexistence of sulfur (S) and sulfur polysulfide (Na₂Sₓ, x=3...5), with a solid electrolyte 65 in between. Near top of charge, the electrochemical reaction upon charging is:

Na₂S₅ → 2 Na + 5 S with an open-circuit voltage U_{OCV} = 2.074 V at a temperature of 350° C.

The Na produced this way will accumulate in the negative electrode compartment, and the level of liquid sodium in the negative electrode is directly proportional to the State of Charge (SoC). For a sodium-sulfur cell, the negative electrode consists in liquid sodium, and the positive electrode in coexistence of liquid sulfur and sodium polysulfides.

Hence, care has to be taken not to overload a particular cell with respect to other cells in the battery. This is particularly relevant for cells or strings of cells that are connected in parallel. If a cell tends to have a higher sodium level than others, for example due to leakage currents or broken cells at some other location in the battery, the level in this cell might reach unwanted Na levels even before the other cells in the battery have reached their maximum charge level.

Especially in large battery systems, extended cycling causes chemical and electrical imbalance between cells of the same string. Therefore, to ensure maximum cycle life and safe operation of the battery pack, the state of charge and the voltage of individual cells must be controlled. Cell balancing is usually done by dissipating or bypassing a fraction of the nominal electrical current of each cell through an external circuit. Passive balancing occurs at cell or string level and does not require control or switching, making it cost effective and reliable. It has, however, the disadvantage to generate losses also during normal operation. Active balancing activates only when needed. While it is more energy efficient, it requires switching at cell or string level and is thus more complicated, more prone to failure and also more cost intensive.

For example, US 5 283 512 shows a battery system of sodium-sulfur storage cells connected in series to form a battery, wherein a charge-limiting circuit controllably isolates an individual storage cell from a charging current when the measured voltage across that individual storage cell exceeds a preselected maximum storage cell voltage. US 2001/0048286 A1 discloses an emergency power system with a sodium sulfur battery being electronically controlled by a circuit.

In view of the above, it would be desirable to implement a current balancing system with automated current control, which is more economical and less complicated than conventional systems.

### SUMMARY OF THE INVENTION

The problems mentioned above are at least partly solved by an electrochemical cell having at least one liquid electrode according to claim 1, a rechargeable battery for electrical energy according to claim 11 and a method for regulating the charging current for an electrochemical cell with a liquid electrode according to claim 12.

In a first aspect, an electrochemical cell is provided, having at least one liquid electrode with a variable liquid level. The cell includes a bypass system for a charging current, which is adapted for bypassing a percentage of a charging current around the cell, wherein the percentage of the bypassed current is dependent on the liquid level. By using the liquid level in the cell as a control factor for the bypass current, an easy to build, economic and reliable bypass current control can be realized.

In a second aspect, a rechargeable battery for electrical energy is provided. It includes a plurality of electrochemical cells, wherein at least a part of the cells are connected in series.

In a further aspect, a method for regulating the charging current for an electrochemical cell with a liquid electrode is provided. It includes charging the cell, as an effect of which a liquid level in a liquid electrode rises, and bypassing a percentage of the charging current around the cell, wherein the percentage of the bypassed current is dependent on the liquid level in the cell. This method principally requires no electronic switching elements and combines the advantages of active and passive switching systems. The bypassing is only activated when it is needed, i.e. depending on the liquid level in the cell, and the cell operates free of losses during normal operation of the cell, i.e. when the cell is in a normal charging state with the liquid level being within an allowed range.

Further aspects, advantages and features of the present invention are apparent from the dependent claims, the description and the accompanying drawings.

### BRIEF DESCRIPTION OF THE DRAWINGS

A full and enabling disclosure, including the best mode thereof, to one of ordinary skill in the art is set forth more particularly in the remainder of the specification, including reference to the accompanying figures wherein:

Fig. 1 schematically shows a cross sectional view of an electrochemical cell with a liquid electrode;

Fig. 2 schematically shows a cross sectional view of an electrochemical cell with a liquid electrode according to embodiments;

Fig. 3 shows a partial cross sectional view of an electrochemical cell with a liquid electrode according to embodiments;

Fig. 4 shows a further partial cross sectional view of an electrochemical cell with a liquid electrode according to embodiments;

Fig. 5 shows a further cross sectional view of an electrochemical cell with a liquid electrode according to embodiments;

Fig. 6 shows an example of a graph of the bypass current in a cell according to embodiments;

Fig. 7 shows a further example of a graph of the bypass current in a cell according to embodiments;

Fig. 8 shows a yet further example of a graph of the bypass current in a cell according to embodiments;

Fig. 9 shows a yet further example of a graph of the bypass current in a cell according to embodiments;

Fig. 10 and 11 show an electrical diagram of a battery system with electrochemical cells according to embodiments.

### DETAILED DESCRIPTION OF THE INVENTION

Reference will now be made in detail to various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described. When several identical items or parts appear in a figure, not all of the parts have reference numerals in order to simplify the appearance.

The systems and methods described herein are not limited to the specific embodiments described, but rather, components of the systems and/or steps of the methods may be utilized independently and separately from other components and/or steps described herein. Rather, the exemplary embodiment can be implemented and used in connection with many other applications.

Generally, embodiments of the invention make use of the liquid nature of the electrode in high temperature sodium batteries, in order to simplify the battery management system. Balancing of individual cells, or strings of cells, is automatically activated by a change in the liquid level of a cell. With this arrangement, the advantages of active and passive balancing are combined: no loss occurs during normal operation, and the need for an externally triggered switch is eliminated. Simultaneously, embodiments provide one or several state of charge detection limit(s).

Although specific features of various embodiments of the invention may be shown in some drawings and not in others, this is for convenience only. In accordance with the principles of the invention, any feature of a drawing may be referenced and/or claimed in combination with any feature of any other drawing.

Embodiments of the invention use the change of the liquid level in the negative electrode upon charging or discharging to activate or deactivate a balancing circuit. The balancing circuit is connected as follows: an electrical contact, e.g., a rod or bar comprising a suitable conducting material, for example metal, is introduced into the sodium compartment and connected to the negative end of the balancing circuit. This contact is isolated from the sodium compartment. The positive end of the balancing circuit is in direct electrical contact with the positive collector. During charging, the sodium level rises. If the cell is operated within the normal state of charge (SoC) range, the variation in sodium level stays within preset boundaries and liquid sodium is not in electrical contact with the balancing circuit.

However, if a particular cell - e.g., connected in series in a string of cells - becomes overcharged, the sodium level will rise until it reaches the height of the negative contact of the balancing circuit. As liquid sodium is electrically conductive, it connects electrically negative and positive electrodes via the balancing circuit to divert a fraction of the nominal current. In the simplest form of balancing circuit, the diverted current is dissipated in heat by a ohmic resistor. In other embodiments, the diverted current is bypassed to another, or the next cell of the string.

This arrangement has some advantages over conventional systems. It automatically enables a current bypass once a predefined state of charge is reached, and therefore eliminates a need for active switching for the process of cell balancing. Unlike conventional passive balancing solutions, there are no additional losses due to the balancing circuit during normal (unbypassed) cell operation. The advantages of active and passive balancing are thus combined. Further, it simultaneously provides a state of charge detection.

Fig. 2 shows an electrochemical cell 10 according to embodiments. It has a negative liquid electrode 20 with a variable liquid level h, a positive electrode 25 and a solid electrolyte 65 in between. The bypass system 30 for bypassing a fraction of the charging current comprises an electrical contact 40. The contact is located such that it gets in electrical contact with the metal of the liquid electrode 20 only above a certain value of the level h. When the level reaches the contact 40, a part of the charging current is then bypassed via connector 45 to resistor 50 and from there to the positive electrode 55. Hence, above a certain level h, a percentage of the charging current is bypassed around the cell 10, such that the bypassed current (I_{BP}) is dependent on the liquid level (h).

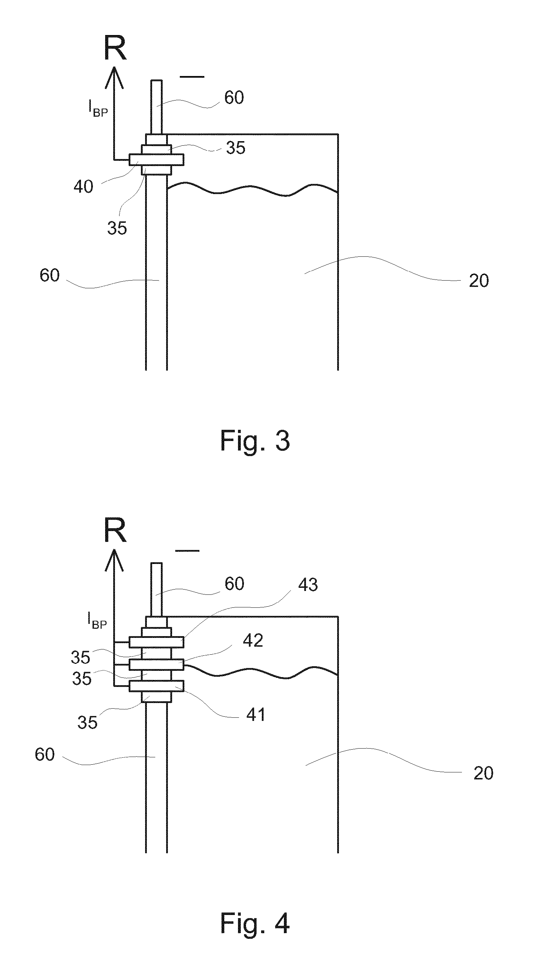

In embodiments as shown in detail in Fig. 3, the bypass electrical contact 40 is provided at and isolated from a solid electrode 60 of the electrochemical cell 10. For example, there may be provided an isolating section 35 between the solid electrode 60 and the contact 40. Below a defined liquid level h in the electrode, the liquid electrode 20 and the bypass contact 40 are electrically isolated from each other.

The amount of current I_{BP} flowing through the bypass system 30, comprising contact 40, connector 45 and resistor 50, is typically dependent on the resistance of resistor 50 and a liquid level h in the cell. In embodiments, the effective resistance of the bypass system may be variable, and might for example be controlled by a control unit in order to further control the charging.

Typically, the effective electrical resistance R of the bypass system 30 decreases with rising liquid level h. In a basic setup as shown in Fig. 1, when the liquid level is lower than the contact 40, there is no bypass current, thus the resistance can be regarded as very high respectively isolated. As soon as the liquid level reaches contact 40, the resistance decreases to the value defined by resistor 50, provided that the resistance of the connector 45 etc. is neglected, and thereby, the bypass system respectively bypass circuit is activated.

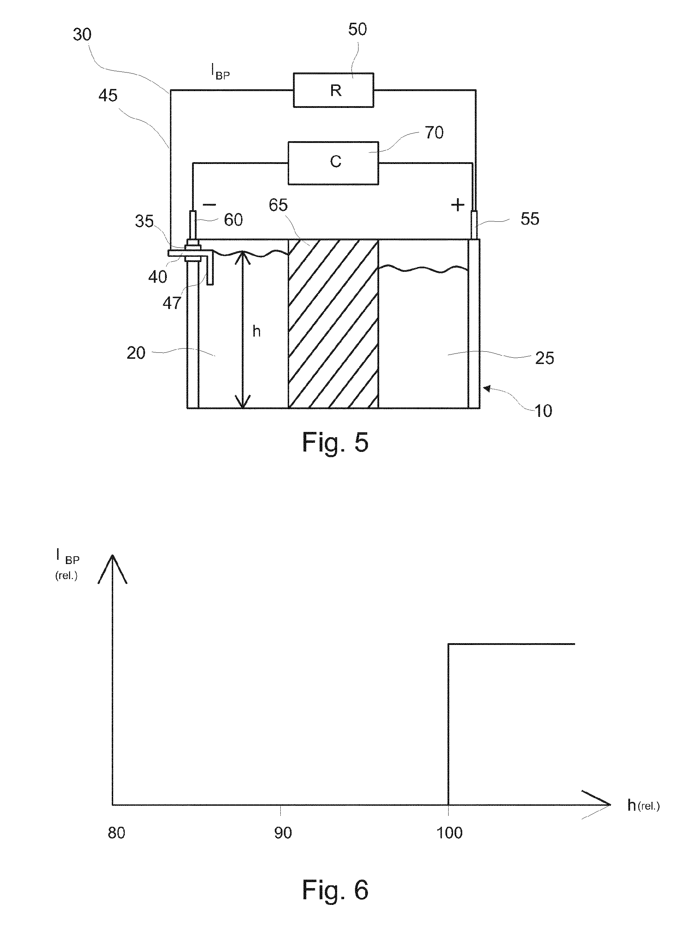

The characteristics of the bypassed current I_{BP} in dependence of the level h of the liquid electrode is in this case typically similar to a Heaviside function, such as shown in Fig. 6.

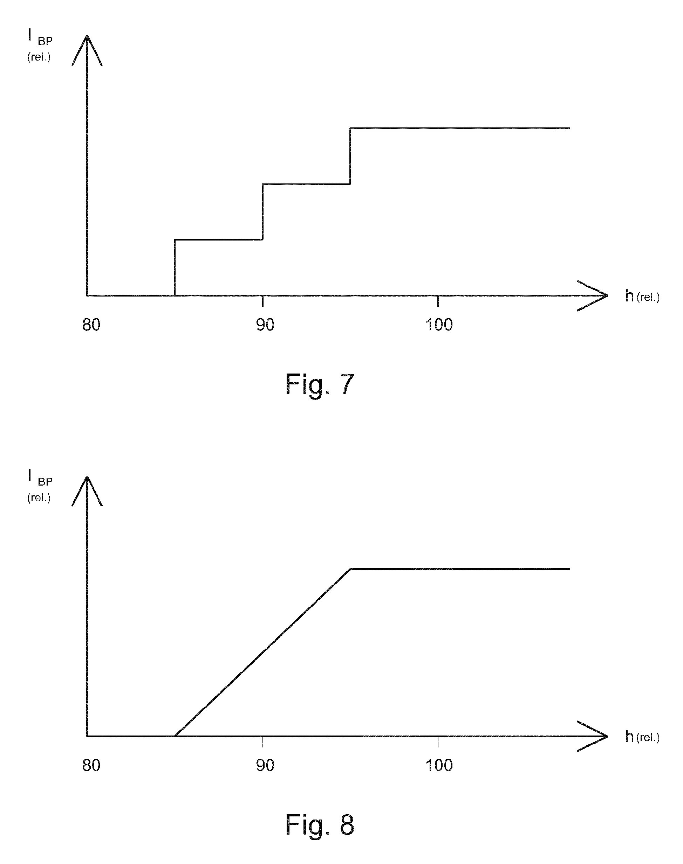

In embodiments, the contact 40 may be adapted respectively provided in a manner such that its contact area with the liquid electrode 20 in the cell increases with rising level h of the liquid. That is, the contact 40 may be provided in a shape such that the contact area with the liquid rises gradually with rising level. An example is shown in Fig. 4, where the contact 40 is embodied by three single contacts 41, 42, 43 provided in different vertical positions, so that they get in contact one after the other with a rising liquid level h. The contacts may be provided such that each contact 41, 42, 43 represents a resistor between the liquid electrode 20 and the conductor 45. Hence, when the liquid level rises, subsequently one after the other of the single contacts comes into contact with the liquid electrode 20, so that the effective resistance for the bypassed current simultaneously decreases, and the bypassed current increases. This is schematically shown in Fig. 7.

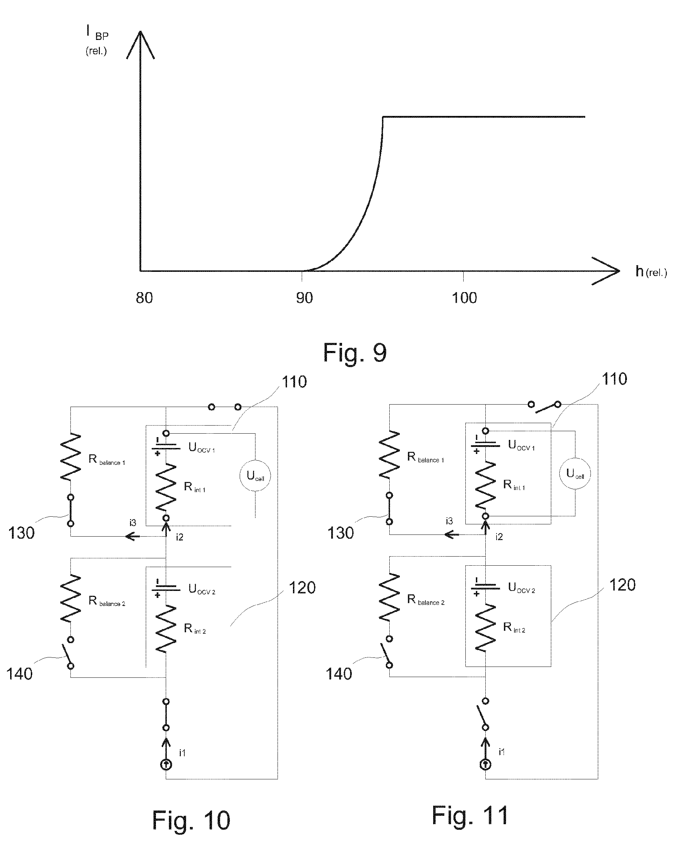

In embodiments, the varying effective resistance of the bypass system 30 can also be achieved by providing the contact 40 with a contact part 47 of elongated shape, which contact part 47 is provided in a vertical fashion. This is exemplarily shown in Fig. 5. When the elongated contact part 47 comprises a material with a relatively low conductivity, and forming a rod or slab itself can form a resistor for the bypassed current, wherein the bypassed current gradually increases with higher liquid electrode level h. The resulting dependency of the bypassed current I_{BP} is schematically shown in Fig. 8. As can be seen, with this configuration, a relatively smoothly for example linear increasing bypass current can be realized. If the diameter of the slab is bigger at a higher position, and lower at a lower position as for example in a cone like manner , then an non-linear increase of the bypassed current as schematically shown in Fig. 9 can be achieved.

In embodiments, the resistor 50 as shown in Figs. 2 and 5 may be part of an electrical control unit. This unit is adapted to steer or control the percentage of the bypassed current of the charging current, additionally to the variation of the current achieved by the contact 40. Thereby, the electrical control unit may be adapted to divert the bypassed current to a further electrochemical cell.

The electrochemical cell may be a sodium/sulphur or sodium/nickelchloride cell, wherein the liquid electrode comprises liquid sodium.

In embodiments, the bypass current I_{BP} can additionally be used for determining the state of charge of the electrochemical cell. For example, in the control unit, there may be a memory table with detected liquid levels - for example expressed by the detected bypass current - and the associated states of charge.

In embodiments, a plurality of the cells 10 are connected to form a battery or storage facility. Thereby, a part of the plurality of cells is typically connected in series to form a string of cells, and further a plurality of strings is connected in parallel.

Embodiments as described herein have in common that during charging of a cell, as an effect of which a liquid level in a liquid electrode rises, a percentage of the charging current is bypassed around the cell as a bypass current I_{BP}. Thereby, the percentage of the bypassed current from the charging current is dependent on the liquid level in the cell. Simultaneously or alternatively to the bypassing, the state of charge of the electrochemical cell can be determined on the basis of the detected bypass current or on a detected liquid level as described above.

The use of cell balancing as described with respect to embodiments becomes evident when considering charging a string of cells in series.

Fig. 10 and 11 show line diagrams for (only exemplarily) two cells 110, 120 in series under various modes of operation as it is working exemplary for recharchable battery. A real system according to embodiments includes several tens or hundreds of cells in series and in parallel, each cell (or string of cells) having its own balancing circuit. Each cell 110, 120 has an open circuit voltage U_{OCV}, a nominal cell current, a cell internal resistance Rᵢₙₜ, and a balancing (bypass) circuit provided by the sodium of the liquid electrode 20 and the bypass contact 40 (symbolized in Fig. 10 and 11 by the closed/open switches 130, 140), and an allocated balancing resistance R_{balance}. The switch 130, 140 and therefore the balancing circuit is closed if the sodium liquid level h of the liquid electrode 20 reaches the contact 40.

For all three cases shown in table 1 below, cell 110 is above the normal SoC operation window, and its balancing circuit 130 is activated by the sodium liquid level h. Cell 120, however, is still within the normal SoC operation window, and its balancing circuit 140 is open. The contacting to the balancing circuit provided by the sodium of the liquid electrode 20 and the bypass contact 40 is symbolized here by a closed/open switch 130, 140 of cell 110 and 120 respectively. The energy diverted by the balancing circuit is dissipated in a resistor R_{balance}.

Table 1 summarizes a simulated example of realistic currents and voltages in a large battery system according to embodiments.

| | Nominal Charging | Charge Topping | Open Circuit |
|---|---|---|---|
| | (Fig. 10) | (Fig. 10) | (Fig. 11) |
| Current Source [A] | 3500 | 90,2 | 0 |
| I1 [A] | 3500 | 90,2 | 0 |
| I2 [A] | 3401 | 0 | -89,9 |
| I3 [A] | 99 | 90,2 | 89,9 |
| U_{cell} [V] | 2,278 | 2,074 | 2,06 |

Table 1 shows examples of currents and voltages in a sodium-sulfur cell 110, 120 and its balancing circuit.

In Fig. 10, the balancing circuit is enabled for cell 110. The open circuit voltage U_{OCV} is 2.074 V, the nominal cell current is 3500 A, the cell internal resistance Pᵢₙₜ is 0,06 mΩ. The balancing resistance R_{balance1} is 23 mΩ.

In Fig. 10, also an example of a nominal current charging mode is shown. Therein, the nominal charging current is charging the string of two cells 110, 120 with a current of 3500 A. Cell 110 is charging at a slower pace, with a current of 3401 A, because the switch 130 close to R_{balance1} is closed, thus guiding a part of the charging current around cell 110 and will be dissipated in R_{balance1}.

Also, Fig. 10 shows an example of a charge topping mode. Once cell 110 has reached 100 % state of charge in the scenario described above, the current in the string is reduced to 90,2 A. Cell 110 now stays at constant SoC, Cell 120 charges further. This mode can be used to periodically equalize the SoC of all cells of the string, including cells that might have drifted into overdischarge after extensive cycling.

Fig. 11 shows an example of an open circuit mode. Once the string of cells is in open circuit mode, cells that have the balancing circuit activated (Cell 110) will self-discharge through it, until the sodium level drops below the negative contact (here with 89.9 A). Cell 120 keeps its actual SoC constant.

It is understood to the skilled person that, while the activation of the bypass circuit is described herein mainly with respect to the coming into contact of the liquid electrode 20 with the bypass contact 40, the bypassing may also be achieved by a number of other means and techniques. For example, there might be a float lever provided at or close to the surface of the liquid electrode, which floats on the metal. When the level h in the cell changes, the lever will thus move, and the change in position can be used for activating a sensor, a sensor array, or even a mechanical switch, all of which then can be used to influence the bypass current in the manner described herein.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. Electrochemical cell (10) having at least one liquid electrode (20) with a variable liquid level (h), comprising:
a bypass system (30) for a charging current, adapted for bypassing a percentage of the charging current around the cell (10), wherein the bypassed current (I_{BP}) is dependent on the liquid level (h).

2. The electrochemical cell (10) of claim 1, wherein an effective electrical resistance (R) of the bypass system (30) is dependent on a liquid level (h) in the cell.

3. The electrochemical cell (10) of claims 1 or 2, wherein an effective electrical resistance (R) of the bypass system (30) decreases with rising liquid level (h).

4. The electrochemical cell (10) of any preceding claim, wherein the bypass system (30) comprises a bypass electrical contact (40), which is provided in the cell (10) such that its contact area with the liquid electrode (20) in the cell increases with rising level (h) of the liquid, thereby activating the bypass system, which bypasses a part of the charging current around the cell.

5. The electrochemical cell (10) of any preceding claim, wherein the bypass system (30) comprises a bypass electrical contact (40), a bypass conductor (45) for bypassing the electrochemical cell (10), and an electrical resistor (50) in the current path of the bypass conductor (45).

6. The electrochemical cell (10) of any preceding claim, wherein the bypass electrical contact (40) is provided at and isolated from one liquid electrode (20) of the electrochemical cell, such that below a defined liquid level (h) in the electrode, the liquid electrode (20) and the bypass contact (40) are electrically isolated from each other.

7. The electrochemical cell (10) of any preceding claim, wherein the liquid electrode (20) is the negative electrode of the cell.

8. The electrochemical cell (10) of any preceding claim, further comprising a solid electrode (60) extending into the liquid electrode (20) from above, wherein the bypass electrical contact (40) is provided at the solid electrode (60), and wherein an isolating section (35) is provided between the solid electrode (60) and the contact (40), such that below a defined liquid level (h) in the liquid electrode (20), the liquid electrode (20) and the bypass electrical contact (40) are electrically isolated from each other.

9. The electrochemical cell (10) of any preceding claim, wherein the electrochemical cell is a sodium/sulphur or sodium/nickelchloride cell, and wherein the liquid electrode (20) comprises liquid sodium.

10. The electrochemical cell (10) of any preceding claim, further comprising:
- a device for determining the state of charge of the electrochemical cell (10) on the basis of the detected bypass current (I_{BP}) or on the basis of a detected liquid level (h).

11. A rechargeable battery for electrical energy, comprising a plurality of electrochemical cells (10) according to one of claims 1 to 10, wherein at least a part of the cells are connected in series.

12. A rechargeable battery for electrical energy according to claim 11, being in at least one state from the list consisting of:
- a nominal current charging mode, wherein a charging current flows through the battery, and wherein at least one cell has an activated balancing circuit and is charged with a lower current than other cells in the string of cells connected in series;
- a charge topping mode, wherein at least one cell has reached 100 % state of charge and an activated balancing circuit, and wherein other cells in the string are charged with a reduced charging current,
- an open circuit mode, wherein no charging current flows through the battery, and wherein cells with an enabled balancing circuit discharge via the balancing circuit.

13. Method for regulating the charging current for an electrochemical cell (10) with a liquid electrode (20), comprising:
- charging the cell, as an effect of which a liquid level (h) in a liquid electrode (20) rises,
- bypassing a percentage of the charging current around the cell (10),
wherein the percentage of the bypassed current (I_{BP}) from the charging current is dependent on the liquid level (h) in the cell (10).

14. The method of claim 13, wherein bypassing a percentage of the charging current around the cell (10) comprises, closing a bypass system (30) by electrical contact closure between the liquid electrode (20) and a bypass contact (40) when the liquid level (h) of the liquid electrode (20) reaches a defined level, and a percentage of the charging current is passed around the cell as the bypass current (I_{BP}).

15. The method of claims 13 or 14, further comprising:
- determining the state of charge of the electrochemical cell (10) on the basis of the detected bypass current (I_{BP}) and/or on a detected liquid level (h).
